# EUROPÄISCHE PATENTSCHRIFT

(11) **EP 1 664 357 B1**
(45) Veröffentlichungstag und Bekanntmachung des Hinweises auf die Patenterteilung: **31.10.2007**
(21) Anmeldenummer: 04761908.5
(22) Anmeldetag: 09.09.2004
(51) Int. Cl.: C21D 9/00, C22C 38/02

(54) **VERWENDUNG EINES STAHLS ZUR HERSTELLUNG VON KETTEN, VERFAHREN ZUR HERSTELLUNG EINER KETTE UND DAMIT HERGESTELLTE KETTE**
USE OF A STEEL FOR THE MANUFACTURING OF CHAINS, METHOD FOR PRODUCING A CHAIN AND CHAIN PRODUCED BY SAID METHOD
UTILISATION D'UN ACIER POUR LA FABRICATION DES CHAINES, PROCEDES DE PRODUCTION D'UNE CHAINE, ET CHAINE AINSI PRODUITE

(30) Priorität: 09.09.2003 CH 154203
(43) Veröffentlichungstag der Anmeldung: 07.06.2006
(73) Patentinhaber: PEWAG AUSTRIA GmbH, 8020 Graz (AT); Swiss Steel AG, 6020 Emmenbrücke (CH)
(72) Erfinder: HASLER, Stephan, CH-6010 Kriens (CH); HELDT, Jens, CH-5314 Kleindöttingen (CH); HUNKELER, Roland, CH-3074 Muri bei Bern (CH); PETER, Heiko, CH-6020 Emmenbrücke (CH); UEBEL, Andreas, CH-6003 Luzern (CH); URLAU, Ulrich, CH-6010 Kriens (CH); PENGG, Agyd, A-8661 Wartberg (AT)
(74) Vertreter: Felder, Peter
(86) Internationale Anmeldenummer: PCT/CH2004/000568
(87) Internationale Veröffentlichungsnummer: WO 2005/024072

(56) Entgegenhaltungen:
- EP-A- 0 132 252
- US-A- 3 830 054
- US-A- 4 002 509
- US-A- 4 222 257
- US-A- 5 562 881
- US-A- 5 714 116
- DATABASE WPI Week 1987 Derwent Publications Ltd., London, GB; AN 1987-346667 XP002303734 -& SU 1 305 193 A (TSNII CHERNOJ METALLURG) 23. April 1987 (1987-04-23)
- PATENT ABSTRACTS OF JAPAN Bd. 0021, Nr. 00 (C-020), 18. August 1978 (1978-08-18) -& JP 53 060813 A (KOBE STEEL LTD; others: 01), 31. Mai 1978 (1978-05-31)

## Beschreibung

### Technisches Gebiet

Die Erfindung betrifft die Verwendung eines Stahls gemäss dem Anspruch 1, Verfahren zur Herstellung einer Kette gemäss den Ansprüchen 2 oder 9 sowie eine Kette gemäss Anspruch 14.

### Stand der Technik

Zur Herstellung von Ketten sind diverse Qualitäts- und Edelstähle bekannt, die insbesondere zur Erreichung der geforderten Festigkeiten im vergüteten Zustand mit den Legierungselementen Mn, Ni, Cr und Mo legiert sind. Beispielsweise wird sehr häufig ein Stahl mit einen Gewichtsanteil von 0,20 bis 0,26% Kohlenstoff, bis zu 0,25% Silizium, 1,10 bis 1,40% Mangan, bis zu 0,020% Phosphor und bis zu 0,020% Schwefel, wobei die Summe der Schwefel- und Phosphoranteile höchstens 0,035% betragen darf, 0,020 bis 0,050% Aluminium, bis zu 0,012% Stickstoff, 0,40 bis 0,60% Chrom, bis zu 0,25% Kupfer, 0,50 bis 0,60% Molybdän, 0,90 bis 1,10% Nickel, sowie weiteren stahlüblichen Beimengungen, der Rest Eisen, verwendet. Dieser Werkstoff ist unter dem Kurznamen 23 MnNiMoCr 5 4 und der Werkstoffnummer 1.6758 nach der Deutschen Industrienorm (DIN) 17 115 bekannt.

In der DE 43 37 148 C1 ist eine verbesserte Edelstahl-Legierung für Ketten und Kettenbauteile beschrieben, die einen zusätzlichen Legierungsanteil von Wolfram enthält und dadurch eine gegenüber früheren Legierungen erhöhte Festigkeit und Zähigkeit aufweisen soll.

Ketten mit einer Mindestbruchspannung von bis zu 800 N/mm² gehören zum Stand der Technik und sind in verschiedenen Normen geregelt (vgl. Sinz, R.; Dalferth, H.; Schick, M.: Die Halbzeugkette. Internationale Fachzeitschrift für Förder-, Lager- und Transporttechnik, 42. Jahrgang, Heft 6, Juni 1996, S. 1 -16).

Es besteht allerdings ein Bedarf nach Ketten mit höherer Festigkeit und Zähigkeit und einer gleichzeitig höheren Anlassbeständigkeit. Wünschbar sind beispielsweise Ketten, die im vergüteten Zustand, insbesondere bei einer Anlasstemperatur von 400°C eine höhere Festigkeit, beispielsweise eine Mindestbruchspannung von 1000 N/mm² oder noch mehr aufweisen. Wenngleich derartige Ketten normenmässig definiert sind und beispielsweise der Güteklasse V bzw. 10 gemäss der Europäischen Norm EN 818-1 zugeordnet sind, ergeben sich bei deren Realisierung ausgehend von den bislang bekannten Kettenstahl-Legierungen erhebliche Schwierigkeiten. Eine Festigkeitssteigerung durch Erhöhung des Gehaltes an Kohlenstoff oder anderer üblicher Legierungselemente ist aus technologischer und wirtschaftlicher Sicht nur beschränkt möglich. Insbesondere wirkt sich der Zusatz dieser Legierungselemente nachteilig auf die Herstellbarkeit und Schweissbarkeit und führt zudem auch zu höheren Kosten.

Die US 4,222,257 und die EP 132 252 A1 beziehen sich auf die Herstellung von Walzdraht mit guter Kaltverformbarkeit. In beiden Druckschriften finden sich generische Auflistungen von Stahlzusammensetzungen, die jedoch sehr breite Bereiche abdecken. Insbesondere bezieht sich die US 4,222,257 auf Stähle mit Gewichtsanteilen von 0,05 bis 0,2% Kohlenstoff sowie 0,5 bis 1,5% Silizium und 0,8 bis 3% Mangan. In der EP 132 252 A1 umfassen diese Gewichtsanteile gar die Bereiche von 0,03 bis 0,75% Kohlenstoff sowie 0,001 bis 2,0% Silizium und 0,15 bis 2% Mangan. Nebst diesen breiten Bereichen sind in den beiden Druckschriften im Rahmen der Ausführungsbeispiele lediglich die fünf nachfolgend erwähnten Stahlzusammensetzungen offenbart:
- im einzigen Ausführungsbeispiel der US 4,222,257 (s. dort Spalte 4, Zeilen 55 bis 59) ist ein Stahl mit 0,08% Kohlenstoff, 0,9% Silizium und 1,5% Mangan (nebst weiteren Elementen) erwähnt;
- im Beispiel 1 der EP 132 252 A1 (s. dort Seite 5, Zeilen 17 und 18 sowie Zeile 32) sind Stähle mit 0,02% Kohlenstoff, 0,003% Silizium und 0,25% bzw. 0,35% Mangan (nebst weiteren Elementen) erwähnt;
- im Beispiel 2 der EP 132 252 A1 (s. dort Seite 7, Zeilen 13 bis 15) ist ein Stahl mit 0,35% Kohlenstoff, 0,25% Silizium und 0,70% Mangan (nebst weiteren Elementen) erwähnt; und
- im Beispiel 3 der EP 132 252 A1 (s. dort Seite 7, Zeilen 29 und 30) ist ein Stahl mit 0,06% Kohlenstoff, 0,9% Silizium und 1,5% Mangan (nebst weiteren Elementen) erwähnt.

Eine Verwendung dieser Stähle als Kettenstahlrohlinge ist weder in der US 4,222,257 noch in der EP 132 252 A1 angesprochen.

Ein an sich bekanntes Verfahren zur Herstellung einer Kette aus einem warmgewalzten Walzdraht umfasst die folgenden Verfahrensschritte:
a) Glühen des Walzdrahts;
b) Ziehen des Walzdrahts bis zum Erreichen eines vorbestimmten Aussenmasses;
c) Glühen des gezogenen Stahls;
d) Auftrennen des gezogenen Stahls in Teilstücke vorgewählter Länge;
e) Biegen und Schweissen der Teilstücke unter Bildung einer Kette; und
f) Vergüten der Kette,
wobei die Reihenfolge der Verfahrensschritte c) und d) auch vertauscht sein kann.

Die beiden Glühschritte a) und c) sind beim bekannten Verfahren deshalb erforderlich, weil zu hohe Festigkeiten des Walzdrahts für den Ziehprozess b) beziehungsweise für die Weiterverarbeitung zu Ketten d) und e) sowohl für den Werkstoff als auch für die verwendeten Werkzeuge und Maschinen unvorteilhaft sind.

Ein ebenfalls bekanntes Verfahren zur Herstellung einer Kette aus einem warmgewalzten Stabstahl umfasst die folgenden Verfahrensschritte:
a) Auftrennen des Stabstahls in Teilstücke vorgewählter Länge;
b) Warmbiegen und Schweissen der Teilstücke unter Bildung einer Kette; und
c) Vergüten der Kette.

Das Vergüten der hergestellten Ketten umfasst ein Härten mit nachfolgendem Anlassen. Das Härten erfolgt in der Regel durch Aufheizen auf eine Temperatur von beispielsweise 880°C, Halten bei dieser Temperatur - beispielsweise während 30 Minuten - und anschliessendem Abschrecken, insbesondere in Wasser, wodurch ein hartes aber sprödes Gefüge gebildet wird. Durch anschliessendes Anlassen bei einer Temperatur von beispielsweise 250°C bis 550°C oder noch höher erfolgt eine Entspannung des Gefüges, wodurch eine gute Kombination aus Festigkeit und Zähigkeit erreicht wird.

### Darstellung der Erfindung

Aufgabe der Erfindung ist es, die Verwendung eines verbesserten Kettenstahls zur Herstellung von Ketten oder Kettenbauteilen anzugeben, mit dem insbesondere die oben genannten Nachteile vermieden werden. Weitere Aufgaben der Erfindung bestehen darin, verbesserte Verfahren zur Herstellung einer Kette anzugeben. Noch eine weitere Aufgabe der Erfindung ist es, eine Kette mit erhöhter Festigkeit und besserer Anlassbeständigkeit bereitzustellen.

Gelöst werden diese Aufgaben durch die im Anspruch 1 definierte Verwendung, die in den Ansprüchen 2 und 9 definierten Verfahren sowie die im Anspruch 14 definierte Kette.

Ein Draht- oder Stabstahl zur Herstellung von Ketten weist einen Gewichtsanteil von 0,17 bis 0,26% Kohlenstoff, 0,9 bis 1,5% Mangan, bis zu 0,02% Phosphor, bis zu 0,02% Schwefel, 0,9 bis 1,5% Nickel, 0,3 bis 1,0% Chrom, bis zu 0,25% Kupfer, 0,4 bis 1,0% Molybdän, 0,02 bis 0,05% Aluminium, 0,02 bis 0,06% Titan und bis zu 0,012% Stickstoff auf, hat zudem einen Silizium-gehalt von 1,0 bis 1,6 Gew-% und enthält schliesslich weitere stahlübliche Beimengungen und Eisen als Rest.

Ausgehend von einem Stahl mit einer Zusammensetzung wie beim eingangs erwähnten Werkstoff 23 MnNiMoCr 5 4 mit Werkstoffnummer 1.6758 nach DIN 17 115 wurde überraschend gefunden, dass durch eine Erhöhung des Siliziumanteils weit über die Normgrenze von höchstens 0,25% ein erheblich verbesserter Kettenwerkstoff bereitgestellt wird, der sich unter anderem durch die folgenden günstigen Eigenschaften auszeichnet:
- hohe Festigkeit im vergüteten Zustand;
- hohe Anlassbeständigkeit;
- gute Zähigkeit im vergüteten Zustand aufgrund einer deutlichen Verschiebung der Anlasssprödigkeit zu höheren Anlasstemperaturen;
- gute Verformungskennwerte (Bruchdehnung, Brucheinschnürung) und damit verbesserte Umformbarkeit im Walzzustand;
- Schmiedefähigkeit und gute Wärmebehandlungseigenschaften;
- unbeeinträchtigte Schweissbarkeit;
- unverminderte Eignung zum Feuerverzinken;
- kostengünstige Produktion aufgrund des im Vergleich zu anderen Legierungselementen günstigen Preises von Silizium.

Das erfindungsgemässe Verfahren zur Herstellung einer Kette aus einem als warmgewalzter Walzdraht vorliegenden erfindungsgemässen Kettenstahlrohling umfasst die folgenden Verfahrensschritte:
a) Ziehen des Walzdrahts bis zum Erreichen eines vorbestimmten Aussenmasses;
b) Auftrennen des gezogenen Stahls in Teilstücke vorgewählter Länge;
c) Biegen und Schweissen der Teilstücke unter Bildung einer Kette; und
d) Nachbehandeln der Kette.

Das erfindungsgemässe Verfahren zur Herstellung einer Kette aus einem als Stabstahl vorliegenden erfindungsgemässen Kettenstahlrohling umfasst die folgenden Verfahrensschritte:
a) Auftrennen des Stabstahls in Teilstücke vorgewählter Länge;
b) Warmbiegen und Schweissen der Teilstücke unter Bildung einer Kette; und
c) Nachbehandeln der Kette.

Mit den erfindungsgemässen Verfahren lassen sich hochfeste Ketten herstellen, die sich durch eine hohe Festigkeit und Anlassbeständigkeit auszeichnen und vor allem als Anschlagketten und Offshore-Ketten sowie als Bergbauketten verwendbar sind.

Vorteilhafte Ausgestaltungen der Erfindung sind in den abhängigen Ansprüchen definiert.

Vorzugsweise hat der Kettenstahlrohling eine Zusammensetzung gemäss Anspruch 3 beziehungsweise 10.

Grundsätzlich kann beim erfindungsgemässen Verfahren der im Walzzustand bereitgestellte Walzdraht in an sich bekannter Weise vor und/oder nach dem Ziehen geglüht werden. Bei der bevorzugten Ausführungsform nach Anspruch 4 wird jedoch das Ziehen an ungeglühtem Walzdraht vorgenommen, und bei der bevorzugten Ausführungsform nach Anspruch 5 wird das Biegen an ungeglühtem gezogenem Stahl vorgenommen. Die beiden vorgenannten Ausführungsformen werden durch die vorteilhaften Eigenschaften des verwendeten Werkstoffes ermöglicht und erlauben eine höchst erwünschte Einsparung von Verfahrensschritten. Dies wiederum ermöglicht unter anderem eine erhebliche Kosteneinsparung bei der Herstellung von Ketten.

Bei der im Anspruch 6 beziehungsweise 11 definierten Ausführungsform umfasst das Nachbehandeln der Kette ein Vergüten, welches ein Härten mit nachfolgendem Anlassen beinhaltet. Insbesondere wird gemäss Anspruch 7 beziehungsweise 12 das Anlassen ei einer Anlasstemperatur von 390 bis 410°C, vorzugsweise 395 bis 405°C durchgeführt. Alternativ kann gemäss Anspruch 8 beziehungsweise 13 das Nachbehandeln der Kette ein Erwärmen mit nachfolgender kontrollierter Abkühlung umfassen.

Die im Anspruch 15 definierte Kette zeichnet sich durch folgende Eigenschaften aus: nach einer Wärmebehandlung von mindestens 1 Stunde bei einer Temperatur von 400°C weist die Kette, geprüft bei Raumtemperatur, eine Bruchspannung von mindestens 1000 N/mm² und eine Kerbschlagarbeit Aᵥ (ISO-V) von mindestens 42 J auf. Demnach erfüllt die Kette die Prüfkriterien, um beispielsweise der Güteklasse V bzw. 10 gemäss der Europäischen Norm EN 818-1 zugeordnet und als "Grade 100" bezeichnet zu werden.

### Wege zur Ausführung der Erfindung

Die nachfolgenden Ausführungsbeispiele sind nicht als Einschränkung des Erfindungsgegenstandes zu verstehen. Der Fachmann wird je nach Bedarf auch abgewandelte Ausführungsformen, die auf den gleichen Prinzipien beruhen, heranziehen.

### Beispiel 1: Herstellung eines konfektionierten Kettenstahlrohlings

Eine Stahlcharge mit einer Zusammensetzung gemäss Tabelle 1 wurde zu Walzdraht mit einem Durchmesser von 16 mm warmgewalzt.

**Tabelle 1: Zusammensetzung der Stahlcharge (Angaben in Gewichts-%, der Rest Eisen und stahlübliche Beimengungen):**

| **C** | **Si** | **Mn** | **P** | **S** | **Ni** | **Cr** | **Mo** | **Cu** | **Ti** | **Al** | **N** |
|---|---|---|---|---|---|---|---|---|---|---|---|
| 0.22 | 1.35 | 1.30 | 0.01 | 0.006 | 1.03 | 0.53 | 0.53 | 0.15 | 0.03. | 0.029 | 0.01 |

Zur Ermittlung der mechanischen Eigenschaften des Walzdrahtes im Walzzustand wurden Zugversuche nach DIN EN 10002.1 sowie Kerbschlagbiegeversuche nach ISO-V, DIN EN 100045 T.1 mit einer Probenbreite von 10 mm durchgeführt, welche die in der Tabelle 2 aufgeführten Werte (dargestellt als repräsentative Wertebereiche) ergaben.

**Tabelle 2: Mechanische Eigenschaften des Walzdrahtes im Walzzustand**

| **Streckgrenze R_{p 0.2} [N/mm²]** | **Zugfestigkeit Rₘ [N/mm²]** | **Bruchdehnung A₅ [%]** | **Brucheinschnürung Z [%]** |
|---|---|---|---|
| 1040 bis 1140 | 1280 bis 1380 | 11 bis 16 | 40 bis 60 |

Anschliessend wurden Proben des Walzdrahtes einer Vergütung unterzogen, welche eine Wärmebehandlung von 30 Minuten bei 880°C, ein Abschrecken mit Wasser sowie ein Anlassen während 60 Minuten bei einer definierten Anlasstemperatur im Bereich von 200°C bis 550°C umfasste. Die mechanischen Eigenschaften des Walzdrahtes im vergüteten Zustand sind in der Tabelle 3 aufgeführt, wobei mit Aᵥ die Kerbschlagarbeit bei Raumtemperatur bzw. bei -20°C bezeichnet ist:

Im Hinblick auf die Verwendung für Offshore-Ketten wurde der Walzdraht auch noch nach folgender Wärmebehandlung geprüft: Glühwarmbad (Salzbad) bei 920°C, Halten und danach Abschrecken auf 180°C mit nachfolgender Luftabkühlung und anschliessendes Anlassen bei 400°C. Danach wurde bei einer Prüftemperatur von -20°C eine Kerbschlagarbeit Aᵥ = 42 J bestimmt.

**Tabelle 3: Mechanische Eigenschaften des Walzdrahtes im vergüteten Zustand**

| | **Anlasstemperatur [°C]** | | | | | | | |
|---|---|---|---|---|---|---|---|---|
| | **200** | **250** | **300** | **370** | **400** | **450** | **500** | **550** |
| **Rₘ [N/mm²]** | 1563 | 1549 | 1531 | 1492 | 1432 | 1315 | 1250 | -- |
| **A₅[%]** | 11 | 10 | 11 | 11 | 12 | 13 | 12 | -- |
| **Z [%]** | 52 | 48 | 52 | 55 | 57 | 56 | 47 | -- |
| **Aᵥ (ISO-V) (RT) [J]** | 77 | 73 | 60 | 57 | 42 | 41 | 43 | -- |
| **Aᵥ (ISO-V) (-20°C) [J]** | 67 | 63 | 47 | 38 | 27 | 32 | 31 | 31 |

### Beispiel 2: Herstellung einer Kette

Kettenstahlrohlinge in Form von Walzdraht gemäss Beispiel 1 wurden zunächst gebeizt und danach folgendem Glühprozess unterworfen: Aufheizen auf 690°C, Halten während 13 Stunden, Abkühlen von 690°C auf 600°C in 7 Stunden, Abkühlung unter einer Kühlhaube bis 70°C. Nach diesem Glühprozess wies der geglühte Walzdraht eine Zugfestigkeit Rₘ = 751 N/mm² und eine Brucheinschnürung Z = 61 %.

Der geglühte Walzdraht wurde auf ein Endmass von 13.7 mm Aussendurchmesser gezogen.

Der gezogene Walzdraht wurde anschliessend nochmals einem Glühprozess wie oben beschrieben unterworfen.

Nach diesem zweiten Glühprozess wurde der gezogene Walzdraht in Teilstücke vorgewählter Länge aufgetrennt, und danach wurden die Teilstücke gebogen und zu einer Kette verschweisst. Schliesslich wurde die Kette durch Aufheizen auf 880°C, Abschrecken in Wasser und 60-minütigem Anlassen bei 400°C vergütet.

Die Eigenschaften der fertigen Kette mit einem Ist-Durchmesser der Kettenglieder von 13,7 mm ergaben in drei Versuchen die in der Tabelle 4 angegebenen Werte:

**Tabelle 4: Mechanische Eigenschaften der fertigen Kette**

| | | | |
|---|---|---|---|
| **Prüfkraft [kN]** | 170,6 | 171,1 | 168,7 |
| **Bruchkraft [kN]** | 270,0 | 267,3 | 269,1 |
| **Bruchdehnung [%]** | 32,7 | 33,8 | 34,6 |

Die obigen Werte übertreffen klar die Sollwerte von 166 kN für die Prüfkraft, 266 kN für die Bruchkraft und 20% für die Bruchdehnung, welche Sollwerte einer Bruchspannung von 1000 N/mm² entsprechen und demnach für eine Kette der Güteklasse V bzw. 10 gemäss der Europäischen Norm EN 818-1 zu erfüllen sind.

## Patentansprüche

1. Verwendung eines Stahls mit einem Gewichtsanteil von 0,17 bis 0,26% Kohlenstoff, 0,9 bis 1,5% Mangan, bis zu 0,02% Phosphor, bis zu 0,02% Schwefel, 0,9 bis 1,5% Nickel, 0,3 bis 1,0% Chrom, bis zu 0,25% Kupfer, 0,4 bis 1,0% Molybdän, 0,02 bis 0,05% Aluminium, 0,02 bis 0,06% Titan, bis zu 0,012% Stickstoff und 1,0 bis 1,6 % Silizium sowie weiteren stahlüblichen Beimengungen und der Rest Eisen, zur Herstellung von Ketten oder Kettenbauteilen.

2. Verfahren zur Herstellung einer Kette, aus einem als Walzdraht vorliegenden Kettenstahlrohling mit einem Gewichtsanteil von 0,17 bis 0,26% Kohlenstoff, 0,9 bis 1,5% Mangan, bis zu 0,02% Phosphor, bis zu 0,02% Schwefel, 0,9 bis 1,5% Nickel, 0,3 bis 1,0% Chrom, bis zu 0,25% Kupfer, 0,4 bis 1,0% Molybdän, 0,02 bis 0,05% Aluminium, 0,02 bis 0,06% Titan, bis zu 0,012% Stickstoff und 1,0 bis 1,6 % Silizium sowie weiteren stahlüblichen Beimengungen und der Rest Eisen, umfassend die folgenden Verfahrensschritte:
a) Ziehen des Walzdrahts bis zum Erreichen eines vorbestimmten Aussenmasses;
b) Auftrennen des gezogenen Stahls in Teilstücke vorgewählter Länge;
c) Biegen und Schweissen der Teilstücke unter Bildung einer Kette; und
d) Nachbehandeln der Kette.

3. Verfahren nach Anspruch 2, **dadurch gekennzeichnet, dass** der Kettenstahlrohling einen Gewichtsanteil von 0,20 bis 0,23% Kohlenstoff, 1,25 bis 1,4% Mangan, bis zu 0,01% Phosphor, 0,005 bis 0,01% Schwefel, 1,0 bis 1,1% Nickel, 0,5 bis 0,6% Chrom, bis zu 0,2% Kupfer, 0,5 bis 0,6% Molybdän, 0,025 bis 0,045% Aluminium, 0,02 bis 0,06% Titan, bis zu 0,012% Stickstoff sowie 1,3 bis 1,4 Gew-% Silizium aufweist.

4. Verfahren nach Anspruch 2 oder 3, **dadurch gekennzeichnet, dass** das Ziehen an ungeglühtem Walzdraht vorgenommen wird.

5. Verfahren nach einem der Ansprüche 2 bis 4, **dadurch gekennzeichnet, dass** das Biegen an ungeglühtem gezogenem Stahl vorgenommen wird.

6. Verfahren nach einem der Ansprüche 2 bis 5, **dadurch gekennzeichnet, dass** das Nachbehandeln der Kette ein Vergüten umfasst, welches ein Härten mit nachfolgendem Anlassen beinhaltet.

7. Verfahren nach Anspruch 6, **dadurch gekennzeichnet, dass** das Anlassen bei einer Anlasstemperatur von 390 bis 410°C, vorzugsweise 395 bis 405°C durchgeführt wird.

8. Verfahren nach einem der Ansprüche 2 bis 5, **dadurch gekennzeichnet, dass** das Nachbehandeln der Kette ein Erwärmen mit nachfolgender kontrollierter Abkühlung umfasst.

9. Verfahren zur Herstellung einer Kette, aus einem als Stabstahl vorliegenden Kettenstahlrohling mit einem Gewichtsanteil von 0,17 bis 0,26% Kohlenstoff, 0,9 bis 1,5% Mangan, bis zu 0,02% Phosphor, bis zu 0,02% Schwefel, 0,9 bis 1,5% Nickel, 0,3 bis 1,0% Chrom, bis zu 0,25% Kupfer, 0,4 bis 1,0% Molybdän, 0,02 bis 0,05% Aluminium, 0,02 bis 0,06% Titan, bis zu 0,012% Stickstoff und 1,0 bis 1,6 % Silizium sowie weiteren stahlüblichen Beimengungen und der Rest Eisen, umfassend die folgenden Verfahrensschritte:
a) Auftrennen des Stabstahls in Teilstücke vorgewählter Länge;
b) Warmbiegen und Schweissen der Teilstücke unter Bildung einer Kette; und
c) Nachbehandeln der Kette.

10. Verfahren nach Anspruch 9, **dadurch gekennzeichnet, dass** der Kettenstahlrohling einen Gewichtsanteil von 0,20 bis 0,23% Kohlenstoff, 1,25 bis 1,4% Mangan, bis zu 0,01% Phosphor, 0,005 bis 0,01% Schwefel, 1,0 bis 1,1% Nickel, 0,5 bis 0,6% Chrom, bis zu 0,2% Kupfer, 0,5 bis 0,6% Molybdän, 0,025 bis 0,045% Aluminium, 0,02 bis 0,06% Titan, bis zu 0,012% Stickstoff sowie 1,3 bis 1,4 Gew-% Silizium aufweist.

11. Verfahren nach Anspruch 9 oder 10, **dadurch gekennzeichnet, dass** das Nachbehandeln der Kette ein Vergüten umfasst, welches ein Härten mit nachfolgendem Anlassen beinhaltet.

12. Verfahren nach Anspruch 11, **dadurch gekennzeichnet, dass** das Anlassen bei einer Anlasstemperatur von 390 bis 410°C, vorzugsweise 395 bis 405°C durchgeführt wird.

13. Verfahren nach nach Anspruch 9 oder 10, **dadurch gekennzeichnet, dass** das Nachbehandeln der Kette ein Erwärmen mit nachfolgender kontrollierter Abkühlung umfasst.

14. Kette, gebildet aus geschweissten Teilstücken, wobei die Teilstücke aus einem Stahl mit einem Gewichtsanteil von 0,17 bis 0,26% Kohlenstoff, 0,9 bis 1,5% Mangan, bis zu 0,02% Phosphor, bis zu 0,02% Schwefel, 0,9 bis 1,5% Nickel, 0,3 bis 1,0% Chrom, bis zu 0,25% Kupfer, 0,4 bis 1,0% Molybdän, 0,02 bis 0,05% Aluminium, 0,02 bis 0,06% Titan, bis zu 0,012% Stickstoff und 1,0 bis 1,6 % Silizium sowie weiteren stahlüblichen Beimengungen und der Rest Eisen.

15. Kette nach Anspruch 14, **gekennzeichnet durch** folgende Eigenschaften: nach einer Wärmebehandlung von mindestens 1 Stunde bei einer Temperatur von 400°C weist die Kette, geprüft bei Raumtemperatur, eine Bruchspannung von mindestens 1000 N/mm² und eine Kerbschlagarbeit Aᵥ (ISO-V) von mindestens 42 J auf.

## Claims

1. Use of a steel with a weight proportion from 0,17 to 0,26% carbon, from 0,9 to 1,5% manganese, up to 0,02% phosphorus, up to 0,02% sulphur, from 0,9 to 1,5% nickel, from 0,3 to 1,0% chromium, up to 0,25% copper, from 0,4 to 1,0% molybdenum, from 0,02 to 0,05% aluminum, from 0,02 to 0,06% titanium, up to 0,012% nitrogen and from 1,0 to 1,6% silicon as well as further admixtures usually contained in steel, and iron as the remainder, for manufacturing chains or chain elements.

2. A method for manufacturing a chain starting from a chain steel blank in the form of a wire rod with a weight proportion from 0,17 to 0,26% carbon, from 0,9 to 1,5% manganese, up to 0,02% phosphorus, up to 0,02% sulphur, from 0,9 to 1,5% nickel, from 0,3 to 1,0% chromium, up to 0,25% copper, from 0,4 to 1,0% molybdenum, from 0,02 to 0,05% aluminum, from 0,02 to 0,06% titanium, up to 0,012% nitrogen and from 1,0 to 1,6% silicon as well as further admixtures usually contained in steel, and iron as the remainder, comprising the following method steps:
a) drawing the wire rod until reaching a predefined outer dimension;
b) separating the drawn steel into sections with a predefined length;
c) bending and welding the sections, thereby forming a chain; and
d) post-processing of the chain.

3. The method according to claim 2, **characterized in that** the steel chain blank has a weight proportion from 0,20 to 0,23% carbon, from 1,25 to 1,4% manganese, up to 0,01% phosphorus, from 0,005 to 0,01% sulphur, from 1,0 to 1,1% nickel, from 0,5 to 0,6% chromium, up to 0,2% copper, from 0,5 to 0,6% molybdenum, from 0,025 to 0,045% aluminum, from 0,02 to 0,06% titanium, up to 0,012% nitrogen as well as from 1,3 to 1,4% silicon.

4. The method according to claim 2 or 3, **characterized in that** the drawing is carried out with a non-annealed wire rod.

5. The method according to any one of claims 2 to 4, **characterized in that** the bending is carried out with a non-annealed drawn steel.

6. The method according to any one of claims 2 to 5, **characterized in that** the post-processing of the chain comprises an annealing, which comprises hardening with subsequent tempering.

7. The method according to claim 6, **characterized in that** the tempering is carried out at a tempering temperature from 390°C to 410°C, preferably from 395°C to 405°C.

8. The method according to any one of claims 2 to 5, **characterized in that** the post-processing of the chain comprises warming up with subsequent controlled cooling.

9. A method for manufacturing a chain starting from a steel chain blank in the form of a steel bar with a weight proportion from 0,17 to 0,26% carbon, from 0,9 to 1,5% manganese, up to 0,02% phosphorus, up to 0,02% sulphur, from 0,9 to 1,5% nickel, from 0,3 to 1,0% chromium, up to 0,25% copper, from 0,4 to 1,0% molybdenum, from 0,02 to 0,05% aluminum, from 0,02 to 0,06% titanium, up to 0,012% nitrogen and from 1,0 to 1,6% silicon as well as further admixtures usually contained in steel, and iron as the remainder; comprising the following method steps:
a) separating of the steel bar into sections with a predefined length;
b) warm bending and welding the sections, thereby forming a chain; and
c) post-processing of the chain.

10. The method according to claim 9, **characterized in that** the steel chain blank has a weight proportion from 0,20 to 0,23% carbon, from 1,25 to 1,4% manganese, up to 0,01% phosphorus, from 0,005 to 0,001% sulphur, from 1,0 to 1,1% nickel, from 0,5 to 0,6% chromium, up to 0,2% copper, from 0,5 to 0,6% molybdenum, from 0,025 to 0,045% aluminum, from 0,02 bis 0,06% titanium, up to 0,012% nitrogen as well as from 1,3 to 1,4% silicon.

11. The method according to claim 9 or 10, **characterized in that** the post-processing of the chain comprises an annealing, which comprises hardening with subsequent tempering.

12. Method according to claim 11, **characterized in that** the tempering is carried out at a tempering temperature from 390°C to 410°C, preferably from 395°C to 405°C.

13. Method according to claim 9 or 10, **characterized in that** the post-processing of the chain comprises warming up with subsequent controlled cooling.

14. A chain made of welded sections, wherein the sections have a weight proportion from 0,17 to 0,26% carbon, from 0,9 to 1,5% manganese, up to 0,02% phosphorus, up to 0,02% sulphur, from 0,9 to 1,5% nickel, from 0,3 to 1,0% chromium, up to 0,25% copper, from 0,4 to 1,0% molybdenum, from 0,02 to 0,05% aluminum, from 0,02 to 0,06% titanium, up to 0,012% nitrogen and from 1,0 to 1,6% silicon as well as further admixtures usually contained in steel, and iron as the remainder.

15. Chain according to claim 14, **characterized in** having the following properties: following a warming treatment for at least 1 hour at a temperature of 400°C the chain exhibits, upon testing at room temperature, a rupture stress of at least 1000 N/mm² and a notch bar impact value Aᵥ of at least 42 J.

## Revendications

1. Utilisation d'un acier comportant une fraction pondérale de 0,17 à 0,26 % de carbone, de 0,9 à 1,5 % de manganèse, jusqu'à 0,02 % de phosphore, jusqu'à 0,02 % de soufre, de 0,9 à 1,5 % de nickel, de 0,3 à 1,0 % de chrome, jusqu'à 0,25 % de cuivre, de 0,4 à 1,0 % de molybdène, de 0,02 à 0,05 % d'aluminium, de 0,02 à 0,06 % de titane, jusqu'à 0,012 % d'azote et de 1,0 à 1,6 % de silicium ainsi que d'autres additifs usuels pour l'acier, le reste étant du fer, pour fabriquer des chaînes ou des éléments de chaînes.

2. Procédé de fabrication d'une chaîne à partir d'une ébauche en acier pour chaînes se présentant sous forme de fil laminé, comportant une fraction pondérale de 0,17 à 0,26 % de carbone, de 0,9 à 1,5 % de manganèse, jusqu'à 0,02 % de phosphore, jusqu'à 0,02 % de soufre, de 0,9 à 1,5 % de nickel, de 0,3 à 1,0 % de chrome, jusqu'à 0,25 % de cuivre, de 0,4 à 1,0 % de molybdène, de 0,02 à 0,05 % d'aluminium, de 0,02 à 0,06 % de titane, jusqu'à 0,012 % d'azote et de 1,0 à 1,6 % de silicium ainsi que d'autres additifs usuels pour l'acier, le reste étant du fer, comprenant les étapes suivantes :
a) étirage du fil laminé jusqu'à l'obtention d'une cote extérieure prédéfinie ;
b) découpe de l'acier étiré en morceaux d'une longueur préalablement sélectionnée ;
c) cintrage et soudage des morceaux pour former une chaîne ; et
d) post-traitement de la chaîne.

3. Procédé selon la revendication 2,
**caractérisé en ce que**
l'ébauche en acier pour chaînes présente une fraction pondérale de 0,20 à 0,23 % de carbone, de 1,25 à 1,4 % de manganèse, jusqu'à 0,01 % de phosphore, de 0,005 % à 0,01 % de soufre, de 1,0 à 1,1 % de nickel, de 0,5 à 0,6 % de chrome, jusqu'à 0,2 % de cuivre, de 0,5 à 0,6 % de molybdène, de 0,025 à 0,045 % d'aluminium, de 0,02 à 0,06 % de titane, jusqu'à 0,012 % d'azote et de 1,3 à 1,4 % de silicium.

4. Procédé selon la revendication 2 ou la revendication 3,
**caractérisé en ce que**
l'étirage est effectué sur du fil laminé non recuit.

5. Procédé selon l'une quelconque des revendications 2 à 4,
**caractérisé en ce que**
le cintrage est effectué sur de l'acier étiré non recuit.

6. Procédé selon l'une des revendications 2 à 5,
**caractérisé en ce que**
le post-traitement de la chaîne comprend une trempe qui comporte un durcissement suivi d'un revenu.

7. Procédé selon la revendication 6,
**caractérisé en ce que**
le revenu est effectué à une température de revenu de 390 à 410 °C, de préférence de 395 à 405 °C.

8. Procédé selon l'une des revendications 2 à 5,
**caractérisé en ce que**
le post-traitement de la chaîne comporte un réchauffement suivi d'un refroidissement contrôlé.

9. Procédé de fabrication d'une chaîne à partir d'une ébauche en acier pour chaînes se présentant sous forme de fil laminé, comportant une fraction pondérale de 0,17 à 0,26 % de carbone, de 0,9 à 1,5 % de manganèse, jusqu'à 0,02 % de phosphore, jusqu'à 0,02 % de soufre, de 0,9 à 1,5 % de nickel, de 0,3 à 1,0 % de chrome, jusqu'à 0,25 % de cuivre, de 0,4 à 1,0 % de molybdène, de 0,02 à 0,05 % d'aluminium, de 0,02 à 0,06 % de titane, jusqu'à 0,012 % d'azote et de 1,0 à 1,6 % de silicium ainsi que d'autres additifs usuels pour l'acier, le reste étant du fer, comprenant les étapes suivantes :
a) découpe de l'acier étiré en morceaux d'une longueur préalablement sélectionnée;
b) cintrage à chaud et soudage des morceaux pour former une chaîne ; et
c) post-traitement de la chaîne.

10. Procédé selon la revendication 9,
**caractérisé en ce que**
l'ébauche en acier pour chaînes présente une fraction pondérale de 0,20 à 0,23 % de carbone, de 1,25 à 1,4 % de manganèse, jusqu'à 0,01 % de phosphore, de 0,005 % à 0,01 % de soufre, de 1,0 à 1,1 % de nickel, de 0,5 à 0,6 % de chrome, jusqu'à 0,2 % en cuivre, de 0,5 à 0,6 % de molybdène, de 0,025 à 0,045 % d'aluminium, de 0,02 à 0,06 % de titane, jusqu'à 0,012 % d'azote et de 1,3 à 1,4 % de silicium.

11. Procédé selon la revendication 9 ou la revendication 10,
**caractérisé en ce que**
le post-traitement de la chaîne comprend une trempe qui comporte un durcissement suivi d'un revenu.

12. Procédé selon la revendication 11,
**caractérisé en ce que**
le revenu est effectué à une température de revenu de 390 à 410 °C, de préférence de 395 à 405 °C.

13. Procédé selon la revendication 9 ou la revendication 10,
**caractérisé en ce que**
le post-traitement de la chaîne comporte un réchauffement suivi d'un refroidissement contrôlé.

14. Chaîne formée de morceaux soudés, sachant que les morceaux sont constitués d'acier comportant une fraction pondérale de 0,17 à 0,26 % de carbone, de 0,9 à 1,5 % de manganèse, jusqu'à 0,02 % de phosphore, jusqu'à 0,02 % de soufre, de 0,9 à 1,5 % de nickel, de 0,3 à 1,0 % de chrome, jusqu'à 0,25 % de cuivre, de 0,4 à 1,0 % de molybdène, de 0,02 à 0,05 % d'aluminium, de 0,02 à 0,06 % de titane, jusqu'à 0,012 % d'azote et de 1,0 à 1,6 % de silicium ainsi que d'autres additifs usuels pour l'acier, le reste étant du fer.

15. Chaîne selon la revendication 14,
**caractérisée par**
les propriétés suivantes :
après un traitement thermique d'au moins 1 heure à une température de 400 °C, la chaîne, vérifiée à la température ambiante, présente une contrainte de rupture d'au moins 1 000 N/mm² et une énergie de choc Aᵥ (ISO-V) d'au moins 42 J.
